# EUROPEAN PATENT SPECIFICATION

(11) **EP 0 844 815 B1**
(45) Date of publication and mention of the grant of the patent: **13.11.2002**
(21) Application number: 96926328.4
(22) Date of filing: 12.08.1996
(51) Int. Cl.: A01F 15/07

(54) **A METHOD AND A UNIT FOR PRODUCING ROUND BALES OF STRAW OR OF LIKE MATERIAL WITH FILM WRAPPING**
VERFAHREN UND VORRICHTUNG UM UMHÜLLTE RUNDBALLEN VON STROH ODER ÄHNLICHEM ZU ROLLEN
PROCEDE ET APPAREIL DE PRODUCTION DE BOTTES DE PAILLE RONDES OU ANALOGUE ENVELOPPEES DANS UN FILM

(30) Priority: 10.08.1995 DK 90095
(43) Date of publication of application: 03.06.1998
(73) Proprietor: Madsen, Kurt Ertbolle, 6880 Tarm (DK)
(72) Inventor: Madsen, Kurt Ertbolle, 6880 Tarm (DK)
(74) Representative: Nielsen, Leif
(86) International application number: DK9600346
(87) International publication number: WO97005767

(56) References cited:
- EP-A- 0 129 021
- DE-B- 2 705 101
- US-A- 4 296 595
- US-A- 4 407 113
- US-A- 5 079 898
- PATENT ABSTRACTS OF JAPAN, Vol. 14, No. 480, C-771; & JP,A,02 200 117 (TAKAKITA CO. LTD.), 8 August 1990.

## Description

The present invention concerns a method for producing round bales of straw or of like material with film wrapping having the steps of claim 1. It has become a widely used practice to keep straw in the outdoors in the form of bales, in that rows of bales are either covered by a film or are made up of bales provided with a film wrapping for weather protection. Bales to be used as fodder are injected with ammonia and are completely wrapped up, either individually or collectively in a kind of film tube, which requires a relatively expensive apparatus.

However, much of the straw is used as bedding for livestock, and it is sufficient that these bales are wrapped with film around their circumference. This may be effectuated with a perceptibly simplified wrapping apparatus. Moreover, it is also so that round bales for that use are commonly produced by use of baling presses, which are far cheaper than more industrial presses, which mostly are rented through machine pools and used for the production of the larger "big bales" in a round or box-shaped form for ensiling or for different industrial purposes.

More and more it is realized, that the gathering in of straw from the field is becoming so expensive, that soon it will be more profitable just to plough down the straw since it may no longer be burned. This is also the case with straw for bedding, where it is decisively necessary to minimize the gathering costs. As mentioned here, it is true that comparatively inexpensive baling presses and wrapping apparatuses may be used, but the combined costs for the machinery and the expendables belonging thereto, namely binder twine for the round baler and wrapping film for the wrapping apparatus, are very straining for the profitability.

By the present invention it is realized, that these conditions may be perceivably bettered by the fact, that it has been found possible to provide the relevant, conventional round bale presser with a comparatively uncomplicated device, which instead of winding twine around the single finished round bale may wrap the bale up with a length of packing film in such a way that the film wrapping will serve both as a structural stabilization of the round bale and as the required packing of it. Thereby it is not only achieved, that the expendable constituted by the twine may be completely avoided, but also that the use of a separate wrapping apparatus may be abandoned entirely, because its functions are taken over by the combined effect of the film supply device and the baling press itself.

Thereby it is achievable that the relatively simple baler may readily deliver round bales in the shape of already stabilized and relevantly packed items, which in this way may be placed side by side, forming a mainly weatherproof row of protected single bales.

The baling presses in question, see e.g. DE-A-2705701, works in a way, that by driving over the field they continuously collect loose straw by means of a pick-up cylinder, which presses the straw towards a set of running, elastically tightened belts, which yield inwardly as more straw is supplied; a continuously supplied layer of straw will thereby be wound up against the action of the elastic force of the belts, which at last run in an almost closed loop around the produced round bale. Just before it reaches the desired size there is supplied a free end of a twine to the inlet, which twine in this way will be embedded between the hitherto periphery of the bale and the straw layer succeedingly wound up on it. Following less than a further turn of the bale the hauling of the baling press is stopped, while the said belts continue to turn the bale, whereby the bale through 10-15 revolutions is winded with twine from a spool of binder twine, in that the twine spool hereby is displaced sidewardly, so that the winding takes place from edge to edge of the bale's peripheral area. Thereafter the twine is cut off, the twine being selfkeeping after the last several windings, and the bale is delivered to the ground by opening the belt system.

By the invention it is realized that it will be possible to substitute the twine supply with a supply of wrapping film according to quite the same principle, whereby it will also be possible to leave out the twine and, not the less, the complete separate wrapping apparatus, which normally is necessary for the desired packing. Then it is important, that the film can be supplied in just the same simple way as the twine, and that the supply may be stopped not only in the same simple way, but in an even simpler way, in that the preferably used film is a stretch film quite corresponding to the well-known 'domestic' film, which sticks to itself; thereby not even a single wrap around the bale is necessary in order to finally secure a fastening of the wrapped-up material.

Normally it will apply that the film web is delivered from a film roll which is narrower than the width of the bale, why this roll in the same way as the said twine spool should be able to move sidewardly during the wrapping process. Hereby it is important, though, that the the wrapping up of the film can be finished with far less revolutions of the bale than by the winding of the twine, since this means that the duration of necessary stops in the straw collecting process may be considerably shortened, resulting in a corresponding increase in the collecting capacity.

On this background the invention will also comprise a unit for mounting both on an existing round baling presse according to claim 3 and a round bale presse having the features of claim 7.

The invention will be explained in more detail in the following with reference to the drawing, where
fig. 1 is a schematic side view of a conventional baling press of a relevant type as shown just before the commencement of the rolling up of a straw bale,
fig. 2 and 3 are corresponding views shown during the beginning and the finish of a rolling up,
fig. 4 is a corresponding view of the press during delivery of the bale, and
fig. 5 is a schematic perspective view for illustrating the invention, and
fig. 6 is a corresponding view of an amended embodiment.

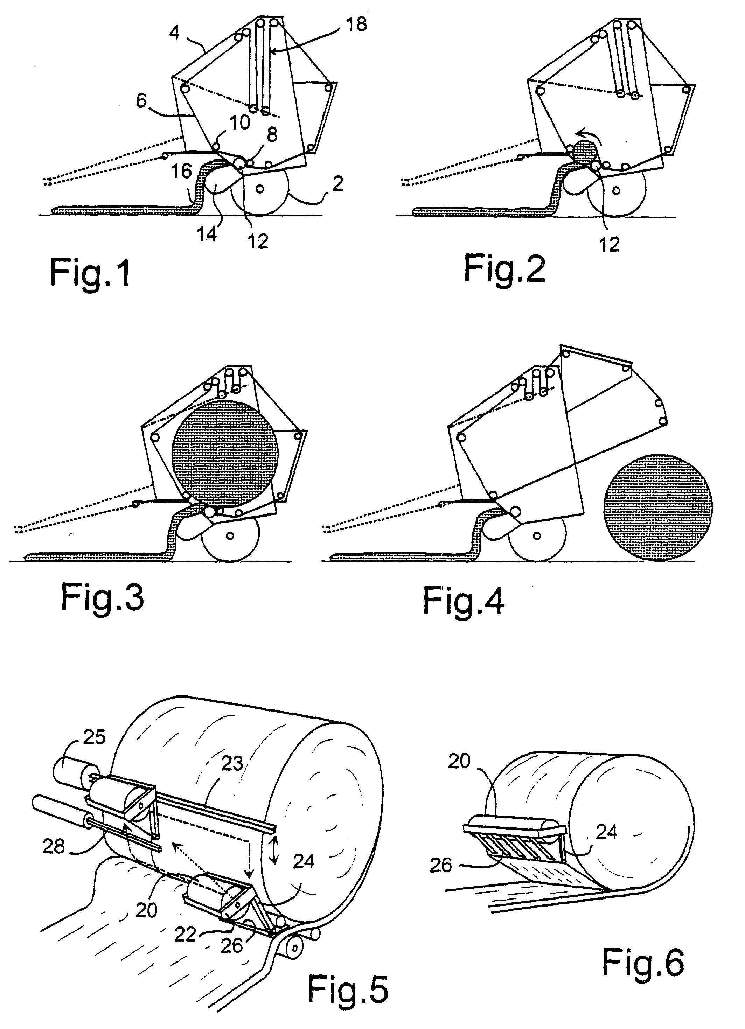

The baling press shown in fig. 1-4 is well-known and shall therefore only be described briefly. On driving wheels 2 there is placed a frame 4, which keeps a circumferential row of guide rollers for a circumferential wrapping and pressing belt 6, and a corresponding system of parallel belts, respectively. Between lower, foremost guide rollers 8 and 10 and just in front of the roller 8 there is placed a fixed pressing roller 12, which is sitting at the outside of the belt 6, and down before this roller there is placed a rotating pick-up roller 14 for the continuous collecting of a loose straw layer 16 from the field and for pressing the straw therein to the area between the rollers 12 and 10. The belt 6 is kept elastically suspended by control through an upper belt tensioning and expansion system 18.

By the said pressing in of the straw the belt section between the rollers 8 and 10 yields inwardly, and by moving the belt in the direction of the arrow in fig. 2, immediately there will initiated a rolling up of the pressed in layer of straw, whereby the belt loop between the rollers 8 and 10 will be enlarged indwardly, while the belt is freed correspondingly from the tensioning system 18. The straw layer is compressed at the inlet over the pressing roller 12, see fig. 3, and besides by the elastic tensioning of the belt 6 itself.

When the desired bale size has been achieved, fig. 3, the hauling is stopped, and after the previously mentioned winding up of the bale with twine by which the bale is rotated 10-15 times, the finished bale is delivered by opening the baling press as shown in a self-explaining way on fig. 4, after which the procedure may be recommenced.

By the present invention all of the binder twine arrangement may be omitted, since instead there may be utilized an additional equipment as indicated in fig. 5, where this equipment is shown in a initial position at the bottom of the right side and in a final position at the top of the left side. The equipment consists of a film roll 20 carried by a supporting frame 22, which is placed horizontally displaceable on a supporting rail 23 and driven by a motor 25 via a not shown threaded spindle. The rail 23 is connected movably up-and-down to the machine frame in a not shown way, as indicated by the double arrow. The supporting frame is hereby movable between the two said positions, which as implied by the punctuated arrows either directly by a sloped course or by a horizontal/vertical course.

The supporting frame 22 has an inner, downwardly projecting back plate 24 having a bottom edge to which the film 19 from the roll 20 can be conveyed together with foremost, elastic holding fingers 26 pressing the unrolled film against the bottom edge of the back plate 24.

At the first time of use it is provided that the film 19 is pulled a bit below the bottom edge of the back plate 24, in that there is commenced with the frame 22 in an elevated position and therefore with a piece of film 21 hanging freely therefrom. When the first bale is about to finish winding up, the frame 22 - preferably with an automatic control - is actuated to be moved to its lowered position in the right side, whereby the hanging film end 21 is brought in abutment against the straw flow 16 and together with this is inserted over the pressing roller 12 to a squeezed position between the hitherto outside of the bale and the newly supplied layer 16. Thereby the film end is anchored in the bale, and then the hauling is stopped.

However, the rotation of the bale is continued by means of the driven belt 6, and thereby the film 19 will be pulled out for an initial wrapping up of the bale. During the further rotation the frame 22 is displaced tranversely, either slantingly upwards against the elevated position in the left side or horizontally to the left, in that the elevation to a higher final level then may happen at any time including at the beginning or the termination of the wrapping. The wrapping up with a few overlapping film windings may be finished by relatively few revolutions of the bale, e.g. only 5-8 revolutions, and the rotation is stopped when the frame 22 has reached its left, elevated position.

Now the whole of the outer surface of the bale is covered with film, and the film 19 is suspended between the bottom edge area of the back plate 24 and the inlet just below the roller 10. Hereby there is an opportunity to cut off the film somewhere in this section, so that thereby the desired hanging film end can be created before the beginning of the next wrapping operation. This may be done with a shearing beam 28, which has a movable knife 30 for shearing the film or possibly a hot wire for melt-cutting the film.

As film material there is preferably used a thin, slightly sticky stretch-film of the same type as the usual "domestic film". It should be aimed at unrolling the film from the bulk roll with a perceivable resistance against the unrolling, so that a certain stretching of the film takes place. This is important, not the least at the final wrapping, where the tightened film layers on the bale will produce a self-locking sticking engagement, so that automatically there is achieved a sufficient fastening of the outer end of the film.

By experiments it has appeared, that the cutting off of the film may be done without the said special shearing, i.e. quite without use of the shearing beam 28, namely by shortly applying a brake to the unrolling of the film from the roll /frame 20,22. Hereby the film will be subjected to a strong tensile influence from the roller 10, which will act on the film in an outward direction from the inlet of the bale, so that the film is pulled apart close to the roller 10. Thereby the hanging film end 21 to be used at the beginning of the next wrapping opereation is formed.

In fig. 6 there is shown an amended embodiment, where the film roll holder 22 and the film roll 20 are extending over the whole width of the bale, whereby there may be dispensed with the special supporting rail 23 with driving equipment 25 belonging to it. However, the holder 22 should always be supported in a vertically displaceable way with a view to the formation and the activation of the freely hanging film end for an initial engagement with the bale. Eo ipso that the film web will become narrower by the said stretching of the web, the film roll should have a certain excessive length as compared with the width of the bale.

The embodiment according to fig. 6 is particularly suitable for use with new baling presses, where an accordance between the bale width and a standard width can be made, while the embodiment according to fig. 5 is particularly suitable for mounting on presses, where the bale width deviates from the attainable standard widths of the film web material.

## Claims

1. A method for producing round bales of straw or like material with film wrapping, utilizing a baling press (2-18) of the type which during driving over the field is brought to continuously collect a layer (16) of straw and progressively to roll up this layer while at the same time compressing the straw, whereby in a final phase of this rolling up the free end of a film web (19) is conveyed in order to be drawn into the bale in the joint face between the outside of the bale and the finally wrapped up straw layer, while subsequently the intake of the straw layer is terminated and the bale is brought to further rotation for a full wrapping up of the bale with the film web, **characterized in that** for conveying the free film web end to the said joint face there is lowered a supply roll (20) with a film end (21) hanging downwardly therefrom for abutment of a lower part of this against the upper side of the straw layer (16) finally collected and rolled up, while after the holding engagement between the bale and the film end established thereby and during or at the termination of the subsequent wrapping rotation the supply roll (20) is elevated to higher position and produces a shearing or tearing off of the film web at a level perceivably below the supply roll for forming the said hanging film end (21), which is activated at the following operation by the said lowering of the supply roll.

2. A method according to claim 1, **characterized in that** the tearing off of the film web is effected by braking the rotation of the film supply roll (20) during continued rotation of the round bale.

3. A unit for producing a wrapping on a round bale by the method according to claim 1, and made as an add on unit with a mounting part to be mounted on a straw layer collecting round baling press, comprising a holding means (22) for rotatably supporting a film supply roll (20), **characterized in** comprising a control means for upward/downward movement (24) of the roll holding means (22) relative to said mounting part in order to effect initial supply of the film web to the intake area of the straw layer, when mounted on said baling press.

4. A unit according to claim 3, in which the holding means (22) for the supply roll (20) is perceivably narrower than the width of the round bale, and that the unit further comprises means (23, 25) for lateral movement of the holding means (22).

5. A unit according to claim 3, and comprising means (28) for shearing or tearing off the film web at a perceivable distance below the film supply roll (20).

6. A unit according to claim 3, and comprising means for braking the rotability of the film supply roll (20) in order to effect rupturing of the film web near the said intake area in response to further rotation of the round bale.

7. A round baling press for performing the method according to claim 1, **characterized in that** it is provided with a unit according to any of the claims 3-6.

## Patentansprüche

1. Ein Verfahren zur Herstellung von Rundballen aus Stroh oder ähnlichem Material mit Folienumhüllung, wobei eine Ballenpresse (2-18) von dem Typen, der beim Fahren über das Feld dazu gebracht wird, kontinuierlich eine Schicht (16) von Stroh zu sammeln und progressiv diese Schicht aufzurollen und gleichzeitig das Stroh zusammenpressen eingesetzt wird, wobei in einer letzten Phase dieses Aufrollens das freie Ende einer Folienbahn (19) hervorgeführt wird, um in der Balle an der Berührungsfläche zwischen der Außenseite der Balle und der fertig umhüllten Strohschicht hineingezogen zu werden, während nachfolgend die Zufuhr der Strohschicht beendet wird und die Balle weiter rotiert wird, um die Balle mit der Folienbahn voll zu umhüllen, **dadurch gekennzeichnet, daß** für die Hervorrührung der freien Folienbahn zur genannten Berührungsfläche eine Zufuhrrolle (20) versenkt angebracht ist, wobei das Folienende (21) davon nach unten hängt als Auflage eines niedrigeren Teiles hiervon gegen die Oberseite der Strohschicht (16) endlich gesammelt und aufgerollt, wobei die Zufuhrrolle (20) nach dem haltenden Eingriff zwischen der Balle und dem Folienende, der dadurch imstande gekommen ist und während oder bei der Beendigung der nachfolgenden Umhüllungsrotation zu einer höheren Position erhöht wird und ein Schneiden und Abreißen der Folienbahn bei einer Höhe sichtlich unter der Zufuhrrolle für die Formung des genannten hängenden Folienendes (21) hervorbringt, welches bei dem folgenden Arbeitsgang von der genannten Senkung der Zufuhrrolle aktiviert wird.

2. Ein Verfahren gemäß Anspruch 1, dadurch gekennzeichet, daß das Abreißen der Folienbahn dadurch bewirkt wird, daß die Rotation der Folienzuführrolle (20) bei kontinuerter Rotation der Rundballen abgebrochen wird.

3. Eine Einheit zur Herstellung von einer Umhüllung an einer Rundballe nach dem Verfahren gemäß Anspruch 1, und hergestellt als eine zusätzliche Einheit mit einem Anbringungsteil, der an einer Rundballenpresse, die Strohschichten sammelt, anzubringen ist, die Haltemittel (22) für die rotierbare Unterstützung einer Folienzuführrolle (20) umfaßt, **dadurch gekennzeichnet, daß** Kontrolmittel zur Bewegung (24) der Rollehaltemitteln (22) nach oben/nach unten relativ zum genannten Anbringungsteil umgefasst sind, um die Eingangszufuhr der Folienbahn zur Einführungsgebiet der Strohsicht zu bewirken, wenn diese an der genannten Rollenpresse angebracht ist.

4. Eine Einheit gemäß Anspruch 3, wobei die Haltemittel (22) für die Zufuhrrolle (20) sichtlich schmaler als die Breite der Rundballe ist, und daß die Einheit weiter Mittel (23,25) zur Seitenbewegung der Haltemitteln (22) umfaßt.

5. Eine Einheit gemäß Anspruch 3, welche Mittel (28) zum Schneiden oder Abreißen der Folienbahn an einem sichtlichen Abstand unter der Folienzufuhrrolle (20) umfaßt.

6. Eine Einheit gemäß Anspruch 3, welche Mittel zur Abbrechung der Rotierbarkeit der Folienzufuhrrolle (20) umfaßt, um Sprengung der Folienbahn (20) nahe an der genannten Zufuhrgegend als Reaktion zu einer weiteren Rotation der Rundballe zu bewirken.

7. Eine Rundballenpresse für Ausführung des Verfahrens gemäß Anspruch 1, **dadurch gekennzeichnet, daß** sie mit einer Einheit gemäß jeden der Ansprüchen 3-6 versehen ist.

## Revendications

1. Procédé pour produire des bottes de paille rondes ou analogue avec enveloppement de bande de film, utilisant une presse à balles (2-18) du type qui lors du roulement sur le terrain est amené à rassembler d'une façon continue une couche (16) de paille et progressivement à enrouler cette couche en même temps qu'en pressant la paille, en même temps que dans une phase finale de cet enveloppement l'extrémité libre d'une bande de film (19) est transporté pour être tirée à l'intérieur de la botte dans le joint entre l'extérieur de la botte et la couche de paille enveloppée en dernier, en même temps que par la suite l'admission de la couche de paille est terminée et la botte est amenée à une rotation ultérieure pour un enveloppement total de la botte avec bande de film, **caractérisé en ce que** pour transporter l'extrémité libre de la bande de film vers ledit joint, un rouleau d'alimentation (20) avec une extrémité de film (21) pendant vers le bas dudit rouleau est baissé pour appui d'une partie inférieure de celui-ci contre le côté supérieur de la couche de paille (16) rassemblé et enveloppé en dernier, tandis qu'après l'engagement de maintien entre la botte et l'extrémité du film ainsi établi et lors de ou à la fin de la rotation d'enveloppement par la suite le rouleau d'alimentation (20) est élevé à une position plus haute et produit un découpage ou l'arrachement de la bande de film à un plan percevablement en dessous du rouleau d'alimentation pour former ladite extrémité de film pendant (21), qui est activé dans l'opération de suite par ladite descente du rouleau d'alimentation.

2. Procédé selon la revendication 1, **caractérisé en ce que** l'arrachement de la bande de film est effectué par freinage de la rotation du rouleau d'alimentation de film (20) lors de la rotation continue de la botte.

3. Unité pour produire un enveloppement sur une botte ronde par le procédé selon la revendication 1 et fait comme une unité ajoutable avec une partie de montage à être montée sur une presse à balles rondes rassemblant une couche de paille, comprenant un moyen de maintien (22) pour supporter un rouleau d'alimentation de film en rotation, **caractérisée en ce que** comprenant un moyen de contrôle pour le mouvement vers le haut/vers le bas (24) du moyen de maintien du rouleau (22) par rapport à ladite partie de montage pour effectuer l'alimentation initiale de la bande de film vers la zone d'entrée de la couche de paille lorsque monté sur ladite presse à balles.

4. Unité selon la revendication 3, dans laquelle le moyen de maintien (22) pour le rouleau d'alimentation (20) est percevablement plus étroit que la largeur de la botte ronde et que l'unité en plus comprend des moyens (23, 25) pour le déplacement latéral du moyen de maintien (22).

5. Unité selon la revendication 3, et comprenant des moyens (28) pour le découpage et l'arrachement de la bande du film à une distance percevable en dessous du rouleau d'alimentation de film (20).

6. Unité selon la revendication 3, et comprenant des moyens pour freiner la rotation du rouleau d'alimentation de film (20) pour effectuer l'arrachement de la bande de film près de ladite zone d'entrée en réponse à une rotation ultérieure de la botte ronde.

7. Presse à balles rondes pour performer le procédé selon la revendication 1, caractérisée en ce qu'elle est munie d'une unité selon l'une quelconque des revendications 3-6.
